# EUROPEAN PATENT APPLICATION

(11) **EP 3 744 975 A1**
(43) Date of publication of application: **02.12.2020**
(21) Application number: 19425037.9
(22) Date of filing: 31.05.2019
(51) Int. Cl.: F04B 1/20, F16H 47/02

(54) **HYDRAULIC TRANSMISSION DEVICE**

(71) Applicant: Dana Motion Systems Italia S.R.L., 42124 Reggio Emilia (IT)
(72) Inventor: Bortoli, Andrea, 38122 Trento (IT); Gambini, Luca, 38068 Rovereto TN (IT); Scopesi, Marco, 38068 Rovereto TN (IT)
(74) Representative: Pfenning, Meinig & Partner mbB

(57) **Abstract**

The present disclosure describes a hydraulic transmission device. The device comprises a case (12); a bent axis hydrostatic motor positioned in the case, the bent axis hydrostatic motor comprising a piston drive assembly (16); a drive shaft (18) having a shaft portion (38) and a flange portion (40), the drive shaft being rotatably supported in the case at at least one bearing region (20) positioned on the shaft portion and being operatively coupled to the piston drive assembly at the flange portion; and a gearing assembly (22) provided on the drive shaft and positioned in the case characterised in that the gearing assembly is positioned between the at least one bearing region and the piston drive assembly.

## Description

### Technical Field

This disclosure relates to the field of hydraulic transmission devices comprising piston hydrostatic devices such as motors, particularly to variable displacement axial piston hydraulic motors, and more particularly to bent axis hydraulic motors.

### Background

Generally, piston hydraulic devices may be axial piston machines or radial piston. Variable axial piston hydraulic devices may be bent axis type devices. With bent axis type axial piston devices, the pistons are at an angle to the drive shaft and thrust plate. Bent-axis type hydraulic devices may be operated as pumps or motors.

A hydraulic transmission device may comprise a bent axis hydraulic motor coupled to a gearing transmission device.

Variable displacement piston hydraulic devices comprise a cylinder block carrying the pistons. The cylinder block rotates about a first axis. The devices also comprise a shaft or a rotor that is configured to couple to a transmission or drive shaft that rotates around a second axis of rotation, also called the transmission axis. Through this shaft, mechanical work that is carried out for the compression of fluid (in the case of the pumps) or mechanical work (in the case of the motors) is determined by the pressure of the operating fluid.

In bent axis type device, the first and the second axis are incident. The relative inclination of these axes is varied to vary the stroke of the pistons between the dead points and, accordingly, the displacement of the machine. For varying displacement in the bent-axis type device, the inclination of the cylinder block is varied.

Bent axis type devices may be configured to have a dry case to reduce energy loss through splashing. In particular, dry case type of construction may comprise the hydraulic motor being integrated into the gearing housing. The hydraulic motor may be comprised in a separate motor casing that is encompassed in the gearing casing. Alternatively, the hydraulic motor may have a motor casing that is joined to the gearing casing.

US2015354355 discloses a hydraulic axial piston machine of dry case type of construction whose casing is provided for connection to a gearing casing so as to form a fluid-tight overall case. The case accommodates a drive assembly that can be adjusted by means of an adjustment device and which serves for delivering hydraulic liquid, and having a drive shaft which is operatively connected to the drive assembly and which is mounted in the case by means of bearings so as to be rotatable about its longitudinal axis, wherein neither the drive assembly, the drive shaft nor the bearings thereof run in a sump of the hydraulic liquid.

The present disclosure is directed, at least in part, to improving or overcoming one or more aspects of the prior art device. In particular, to improving the overall encumbrance and reliability of a dry case axial piston hydraulic device.

The present disclosure is directed, at least in part, to improving or overcoming one or more aspects of the prior art system.

### Brief Summary of the Invention

The present disclosure describes a hydraulic transmission device comprising a case; a bent axis hydrostatic motor positioned in the case, the bent axis hydrostatic motor comprising a piston drive assembly; a drive shaft having a shaft portion and a flange portion, the drive shaft being rotatably supported in the case at at least one bearing region positioned on the shaft portion and being operatively coupled to the piston drive assembly at the flange portion; and a gearing assembly provided on the drive shaft and positioned in the case characterised in that the gearing assembly is positioned between the at least one bearing region and the piston drive assembly.

### Brief Description of the Drawings

The foregoing and other features and advantages of the present disclosure will be more fully understood from the following description of various embodiments, when read together with the accompanying drawings, in which:
Fig. 1 is a cross sectional view through a first embodiment of the hydraulic transmission device according to the present disclosure;
Fig. 2 is a variant of the gearing assembly of Fig. 1;
Fig. 3 is a perspective view of the drive train of Figs. 1;
Fig. 4 is a cross sectional view through a second embodiment of the hydraulic transmission device according to the present disclosure;
Fig. 5 is a sectional view through the rotary group of the hydraulic transmission device of Fig. 4 and
Fig. 6 is a perspective view of the drive train of Figs. 4 and 5.

### Detailed Description

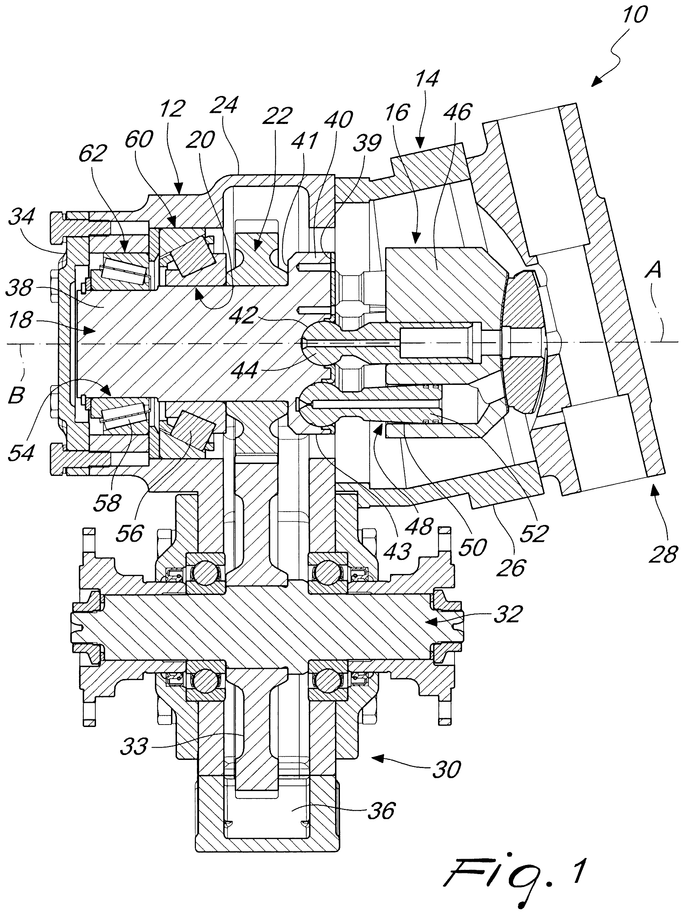

This disclosure generally relates to a hydraulic transmission device for the transmission of power. Figs. 1, 2, 4 and 5 illustrate the hydraulic transmission device **10.** The hydraulic transmission device **10** comprises a case **12,** a hydraulic motor **14,** a piston drive assembly **16,** a drive shaft **18,** and at least one bearing region **20** and a gearing assembly **22.** With reference to Figs. 1, 2 and 4, the hydraulic transmission device **10** further comprises a driven shaft **32.** The driven shaft **32** is provided with a driven gear wheel **33.** The hydraulic motor **14** is a bent axis hydraulic motor.

With reference to Figs. 1, 2, 4 and 5, the case **12** is configured to accommodate the hydrostatic motor **14** with the piston drive assembly **16,** the drive shaft **18,** the at least one bearing region **20** and the gearing assembly **22.** With reference to Figs. 1, 2 and 4, the driven shaft **32** extends through the case **12.** The driven gear wheel **33** is accommodated in the case **12.**

Case **12** has a first case part **24** and a second case part **26.** The first case part **24** is sealingly connected to the second case part **26.** The first case part **24** may be connected to the second case part **26** through mechanical connections. Sealing means such as O rings may be used for a fluid tight connection.

Fig. 1 illustrates, in the first embodiment, that the first case part **24** accommodates the drive shaft **18,** the at least one bearing region **20**, the gearing assembly **22** and the driven shaft **32.** The second case part **26** accommodates the hydrostatic motor **14** with the piston drive assembly **16.** The driven gear wheel **33** is located in the first case part **24.**

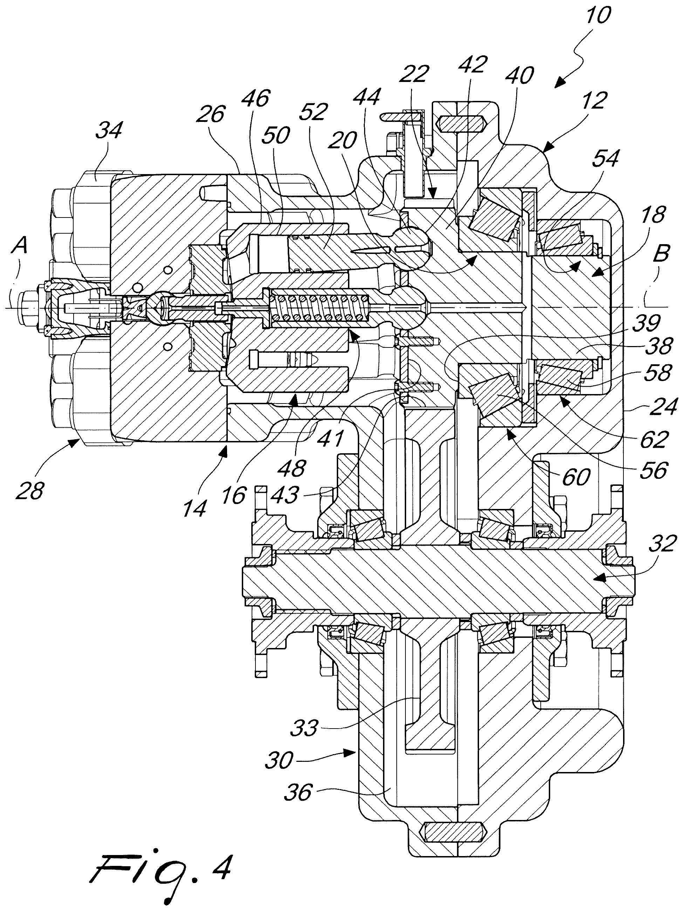

Fig. 4 illustrates, in the second embodiment, that the first case part **24** accommodates a portion of the drive shaft **18,** the at least one bearing region **20** and a portion of the driven shaft **32.** The second case part **26** accommodates the hydrostatic motor **14** with the piston drive assembly **16,** a portion of the drive shaft **18,** a portion of the driven shaft **32** and the driven gear wheel **33.**

With reference to Figs. 1, 4 and 5, the case **12** has an upper portion **28** and a lower portion **30.** The hydrostatic motor **14** with the piston drive assembly **16,** the drive shaft **18,** the bearing region **20** and the gearing assembly **22** are positioned in the upper portion **28** of the case **12.** Case **12** has an end cap **34** to enclose the hydrostatic motor **14.** The driven shaft **32** is positioned in the lower portion **30.**

Case **12** may have a dry case configuration. Dry type configuration provides for the piston drive assembly **16** to rotate in an environment free of lubricant fluid. The removal of lubricant fluid may occur through the flow thereof from the upper portion **28** to the lower portion **30.** Case **12** may have an oil sump **36** provided at the bottom thereof. The oil sump **36** is positioned in the lower portion **30** below the driven shaft **32.**

The oil sump **36** is provided to contain lubricant fluid. The lubricant fluid may originate from the hydrostatic motor **14** or from the gearing in the hydraulic transmission drive **10.** From the oil sump **36,** the lubricant fluid that has flowed in may be removed by means such as pumps (not shown) and conducted into a tank (not shown) and/or resupplied to lubricant ducts (not shown). The hydraulic transmission device **10** could be provided with an appropriate lubrication system (not shown) capable of controlling lubricant oil level in the oil sump **36.**

The hydraulic motor **14** is positioned in the case **12.** The hydraulic motor **14** comprises the piston drive assembly **16.** The piston drive assembly **16** comprises a cylinder block **46** having a plurality of cylinder assemblies **48.** The cylinder block **46** is rotatable about a rotation axis **A.** The cylinder block **46** is rotatably supported in the case **12.** Cylinder block **46** is rotatably supported in the second case part **26.** The cylinder assemblies **48** are radially positioned in the cylinder block **46** relative to the rotation axis **A.** The cylinder assemblies **48** are mutually angularly spaced about the rotation axis **A.**

Each cylinder assembly **48** comprises a cylinder **50** and a piston **52.** Pistons 52 extend and retract in the cylinders **50.** Pistons **52** have a piston head **44.** Piston head **44** is positioned external to the cylinder **50.** Piston **52** travels in the cylinder **50** during a stroke of the piston **52.** The cylinder block **46** may comprise conduits for the passage of fluid to the cylinders **50** for the extension or retraction of the pistons **52.**

Drive shaft **18** has a longitudinal axis **B.** Drive shaft **18** may be an input shaft of a transmission system. Drive shaft **18** may have a shaft portion **38** and a flange portion **40.** Flange portion **40** may be at a terminal end of the drive shaft **18.** Flange portion **40** has a first side **39,** a second side **41** and an outer surface **43** connecting the first and the second sides **39, 41.** Outer surface **43** extends around the flange portion **40.** First and second sides **39, 41** are mutually opposite. Second side **41** is configured to have sockets **42** for receiving the piston heads **44.** Shaft portion **38** extends from the first surface **39** of the flange portion **40.**

The drive shaft **18** is operatively coupled to the piston drive assembly **16.** Drive shaft **18** is coupled to the piston drive assembly **16** at the flange portion **40.** Piston drive assembly **16** is coupled to the flange portion **40** at the second side **41.** Drive shaft **18** is coupled to the piston drive assembly **16** without an intervening shaft or rotor. The extension or retraction of the pistons **52** effect a rotation of the drive shaft **18.**

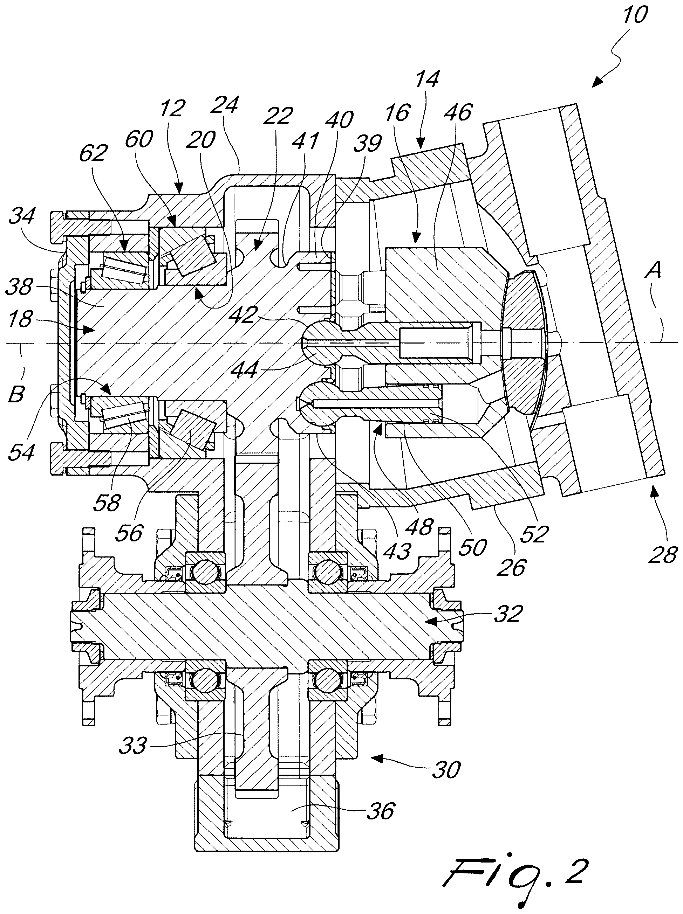

The drive shaft **18** is rotatably supported in the case **12.** Drive shaft **18** is rotatably supported at at least one bearing region **20.** The at least one bearing region **20** is positioned on the shaft portion **38.** Case **12** has a bearing receiving region **60** that corresponds to the at least one bearing region **20.** The drive shaft **18** is rotatably supported so as to be rotatable about the longitudinal axis **B.** With reference to Fig. 1 and 2 , in the second embodiment, the at least one bearing region **20** is spaced from the flange portion **40.** With reference to Fig. 4, in the second embodiment, the at least one bearing region **20** is adjacent the flange portion **40.**

In an embodiment, the hydraulic transmission device **10** comprises a further bearing region **54.** The second bearing region **54** is adjacent to the first bearing region **20.** The first bearing region **20** is interposed between the second bearing region **54** and the flange portion **40.** Case **12** has a first and a second bearing receiving regions **60, 62** corresponding to the first and second bearing regions **20, 54.**

The drive shaft **18** is rotatably mounted to the case **12** by a first bearing **56** and a second bearing **58** positioned at the first and second bearing regions **20, 54** respectively. The first and second bearings **56, 58** are tapered rolling bearings. The first and second bearings **56, 58** are positioned in an O configuration.

The gearing assembly **22** is provided on the drive shaft **18.** Gearing assembly **22** is accommodated in the case **12.** Gearing assembly **22** is positioned between the at least one bearing region **20** and the piston drive assembly **16.** Gearing assembly **22** meshes with driven gear wheel **33.** Gearing assembly **22** is coupled to the driven shaft **32** through the driven gear wheel **33.** Rotation of the drive shaft **18** is transmitted to the driven shaft **32** through the gearing assembly **22** meshing with the driven gear wheel **33.** The gearing assembly **22** may be coupled to the drive shaft **18** by known mechanical connection systems such as splined profile coupling, tang coupling or interference coupling.

The gearing assembly **22** comprises a set of indentations. The indentations are configured to mesh with the driven gear wheel **33.** The set of indentations may be formed as a set of teeth. The set of indentations are provided around the drive shaft **18.** The set of indentations are formed on the surface of the drive shaft **18.** The set of indentations may be arranged concentrically on the drive shaft **18.** The set of indentations may be radially positioned on the drive shaft **18** relative to the longitudinal axis **B.** The set of indentations may be mutually angularly spaced about the longitudinal axis **B.** In an embodiment, the gearing assembly **22** is a gear wheel. The set of indentations may be configured as teeth of the gear wheel.

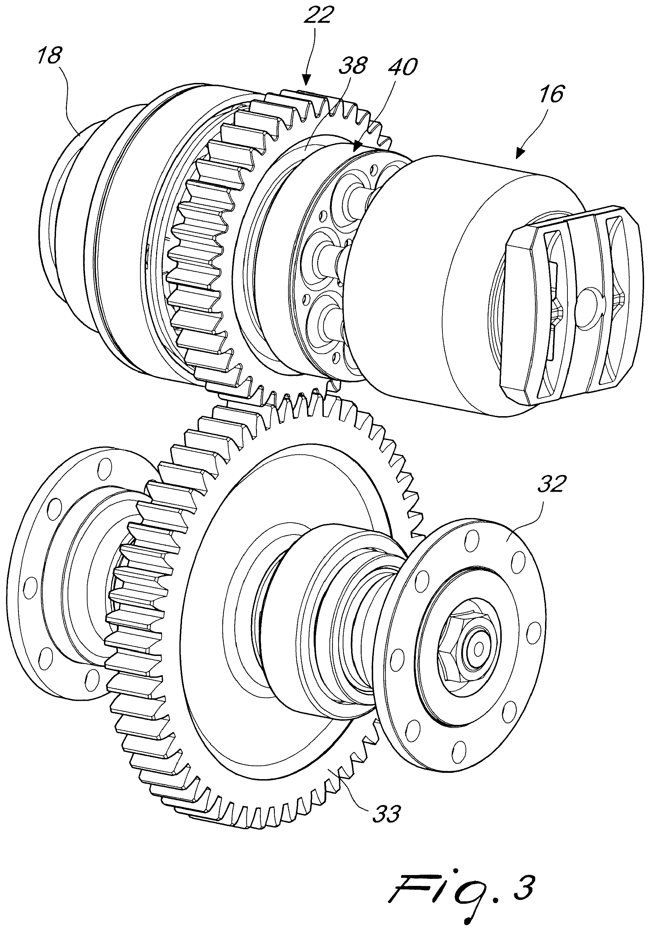

In the first embodiment, with reference to Figs. 1 to 3, the gearing assembly **22** is positioned on the shaft portion **38.** The gearing assembly **22** is positioned adjacent the flange portion **40.** The gearing assembly **22** is positioned around the shaft portion **38.** The gearing assembly **22** is positioned on the surface of the shaft portion **38.** The gearing assembly **22** is formed in the surface of the shaft portion **40.**

With reference to Figs. 1 and 2, the at least one bearing region **20** is positioned adjacent the gearing assembly **22.** In particular, the first bearing region **20** is positioned adjacent the gearing assembly **22.** The gearing assembly **22** is interposed between the flange portion **40** and the first bearing region **20.** The first bearing region **20** is interposed between the gearing assembly **22** and the second bearing region **54.** The first bearing **56** is located adjacent the gearing assembly **22.**

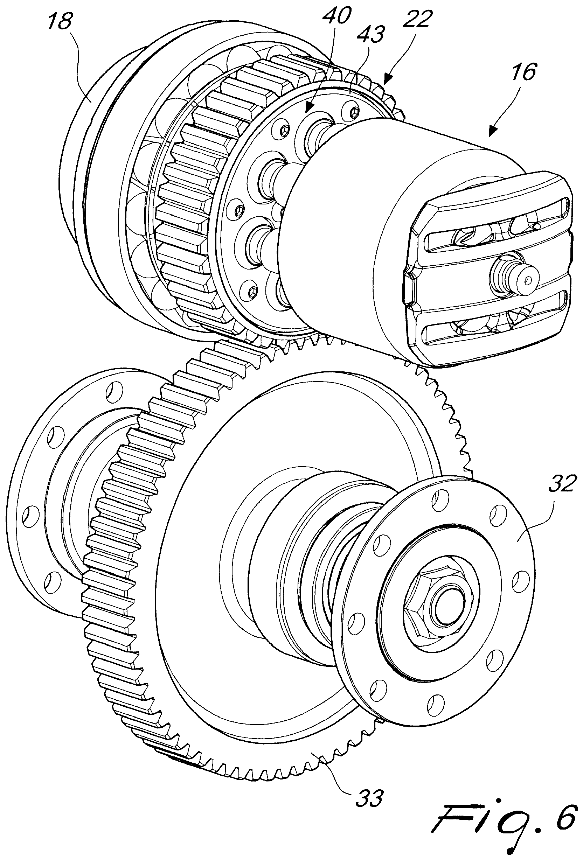

In a variant of the first embodiment, with reference to Fig. 2, the gearing assembly **22** is formed monolithically with the drive shaft **18**. In the second embodiment, with reference to Figs. 4, 5 and 6, the gearing assembly **22** is positioned on the flange portion **40.** The gearing assembly **22** is positioned concentrically on the flange portion **40**. The gearing assembly **22** is positioned on the outer surface **43** of the flange portion **40.** The gearing assembly **22** is positioned around the outer surface **43.** The gearing assembly **22** in formed in the outer surface **43.**

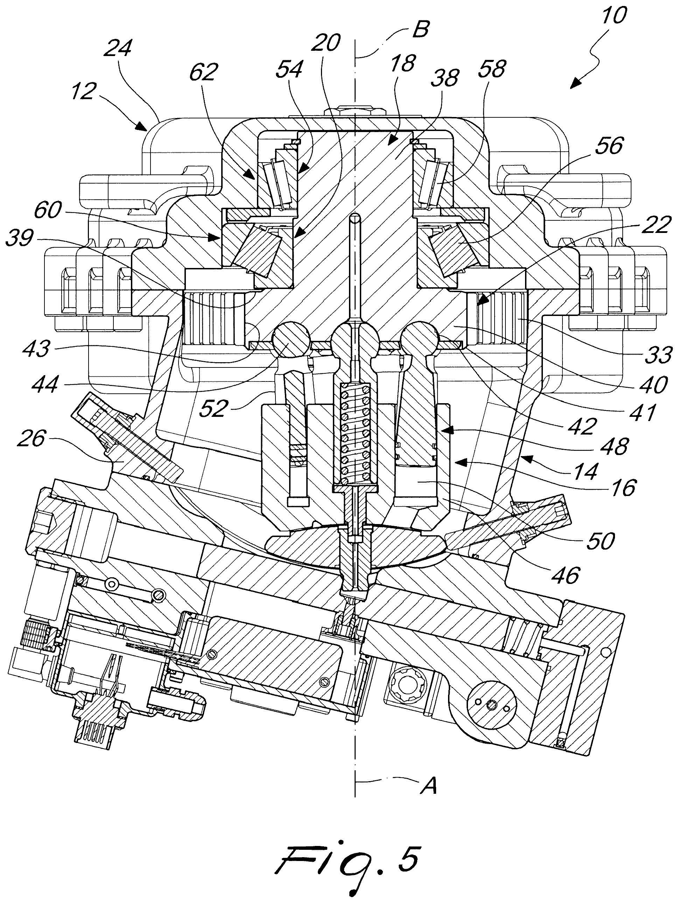

With reference to Figs. 4 and 5, the at least one bearing region **20** is positioned adjacent the flange portion **40.** In particular, the first bearing region **20** is positioned adjacent the flange portion **40.** The first bearing region **20** is interposed between the flange portion **40** and the second bearing region **54.** The first bearing **56** is located adjacent the flange portion **40.** First bearing **56** is interposed between the flange portion **40** and the second bearing **58.**

The skilled person would appreciate that foregoing embodiments may be modified or combined to obtain the hydraulic transmission device **10** of the present disclosure.

### Industrial Applicability

This disclosure describes a hydraulic transmission device **10** for a transmission system for moving a vehicle. The hydraulic transmission device **10** has a reduced overall encumbrance. The hydraulic transmission device **10** reduces the vehicle installation footprint and reduces the overall length of the motor transmission assembly.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A hydraulic transmission device (10) comprising:
a case (12);
a bent axis hydrostatic motor (14) positioned in the case (12), the bent axis hydrostatic motor (14) comprising a piston drive assembly (16);
a drive shaft (18) having a shaft portion (38) and a flange portion (40), the drive shaft (18) being rotatably supported in the case (12) at at least one bearing region (20) positioned on the shaft portion (38) and being operatively coupled to the piston drive assembly (16) at the flange portion (40); and
a gearing assembly (22) provided on the drive shaft (18) and positioned in the case (12) **characterised in that** the gearing assembly (22) is positioned between the at least one bearing region (20) and the piston drive assembly (16).

2. The hydraulic transmission device (10) of claim 1 wherein the gearing assembly (22) is positioned on the shaft portion (38) and adjacent the flange portion (40).

3. The hydraulic transmission device (10) of claim 1 wherein the gearing assembly (22) is positioned on the flange portion (40).

4. The hydraulic transmission device (10) of claim 1 wherein the gearing assembly (22) is a gearwheel.

5. The hydraulic transmission device (10) of claim 1 wherein the gearwheel comprises a set of indentations.

6. The hydraulic transmission device (10) of any one of preceding claims further comprising a second bearing region (54) wherein the drive shaft (38) is rotatably mounted to the case (12) by a first bearing (56) and a second bearing (58) positioned at the first and second bearing regions (20, 54).

7. The hydraulic transmission device (10) of claim 6 wherein the first and second bearings (56, 58) are tapered rolling bearings positioned in an O configuration.

8. The hydraulic transmission device (10) of any one of preceding claims further comprising a driven shaft (32) extending through the case (12) wherein the gear assembly (22) is coupled to the driven shaft (32) through a driven gearwheel (33).

9. The hydraulic transmission device (10) of any one of preceding claims wherein the case (12) has a dry case configuration wherein an oil sump (36) is provided at a bottom of the case (12).
